# EUROPEAN PATENT APPLICATION

(11) **EP 2 706 329 A2**
(43) Date of publication of application: **12.03.2014**
(21) Application number: 13183918.5
(22) Date of filing: 11.09.2013
(51) Int. Cl.: G01F 23/14, G21C 17/035, G21C 19/07, G21D 3/04

(54) **Method and system for a spent fuel pool level measurement without electrical power**

(30) Priority: 11.09.2012 US 201213609399
(71) Applicant: GE-Hitachi Nuclear Energy Americas LLC, Wilmington, NC 28401 (US)
(72) Inventor: Ginsberg, Robert Joseph, Wilmington, NC North Carolina 28401 (US); Bass, John R., Wilmington, NC North Carolina 28401 (US)
(74) Representative: Williams, Andrew Richard

(57) **Abstract**

A method and apparatus for measuring a liquid level (10c) of a Spent Fuel Pool (10) of a Light Water Reactor without using electrical power. The method and apparatus may use a pressurized gas source (14) connected to tubing (12) or piping that may discharge near the bottom of the Spent Fuel Pool (10). The system may include a flow meter (16) and throttle valve (18) that may be used to determine a required gas pressure to provide a specified flow rate of gas for known Spent Fuel Pool water levels. By obtaining calibration data points of pressure and flow for multiple Spent Fuel Pool water levels, a calibration curve may be obtained that allows for the measurement of Spent Fuel Pool liquid level using the system, without the need for electrical power.

## Description

### BACKGROUND OF THE INVENTION

### Field of the Invention

Example embodiments relate generally to nuclear reactors, and more particularly to a method and system for a spent fuel pool (SFP) level measurement that may be accomplished without the use of electrical power. The system may be particularly beneficial in the event a plant emergency that causes plant electrical power to be disrupted, or normal cooling of the spent fuel pools to otherwise become impaired.

### Related Art

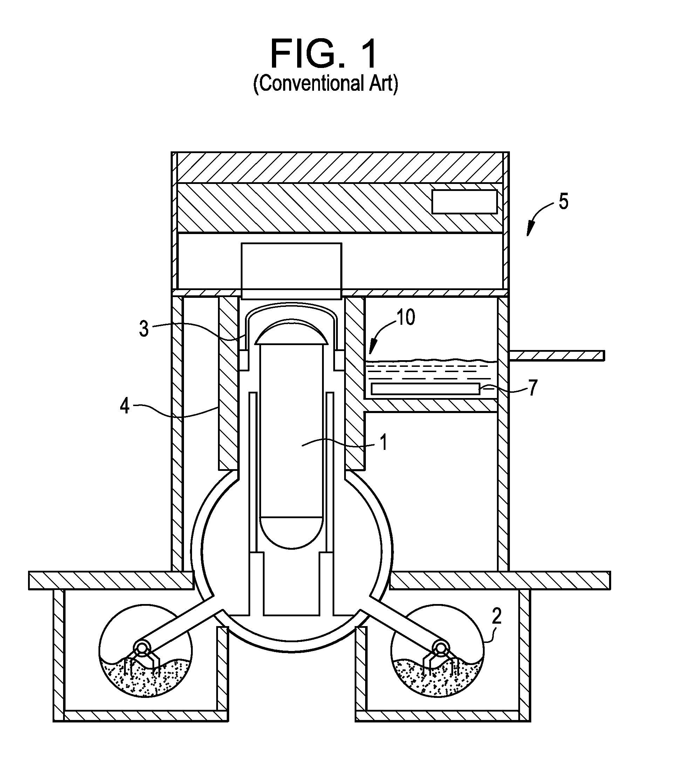

FIG. 1 is a cut-away view of a conventional boiling water nuclear reactor (BWR) reactor building 5, which is one example of a light water reactor (LWR). It should be understood that this is merely an example, as example embodiments may be equally applied to other reactor design layouts, such as pressurized water reactors (PWR) or other LWRs. In the BWR, the spent fuel pool (SFP) 10 is a storage pool used to store spent fuel 7 that remains following the use of the fuel to power the BWR reactor 1. The SFP 10 is generally positioned in a location adjacent to, and toward the top of, the reactor 1 (as shown in FIG. 1, the SFP 10 is located in secondary containment, outside of the steel containment vessel 3 and concrete shell 4 protecting reactor 1). It should be noted that in other reactor designs, the spent fuel pool may be located at a same plant elevation as the reactor 1, or at an elevation that is below the reactor 1. The spent fuel 7 is generally stored in the spent fuel pools 10 for a period of at least 5 years before being sent to reprocessing or cask storage. The SFP 10 is typically 40 feet or greater in depth, with a floor that is equipped to support the spent fuel 7. About 8 feet of water (above the top of the spent fuel 7, itself) is generally needed to keep radiation levels in the SFP 10 within acceptable limits.

A flow of cooling water, provided by conventional fuel pool cooling and cleanup system (not shown), provides shielding from radiation and maintains the SFP 10 at cool temperatures that ensure the cooling water does not boil (thereby exposing the spent fuel to open air). Specifically, the conventional fuel pool cooling pumps transfer the water from the spent fuel pool to the fuel pool cooling and cleanup system. The conventional fuel pool cooling and cleanup system cools and cleans the water, using a heat exchanger and demineralizers (removing some radioisotopes, and other impurities). The spent fuel pool cooling pumps then send the cool, clean water back to the SFP 10.

During a serious plant accident, normal plant electrical power may be disrupted. In particular, the plant may be without normal electrical power to run the conventional spent fuel pool cooling pumps, operate the spent fuel pool cooling and cleanup system, and power fuel pool instrumentation. If electrical power is disrupted for a lengthy period of time, disruption in the use of the fuel pool cooling and cleanup system may cause water in the spent fuel pool to warm and eventually boil. When enough boiling occurs, water levels in the pool may drop to levels that no longer provide enough cooling water to effectively shield radiation that may be caused by the spent fuel. In very serious emergencies, water in the SFP 10 may boil and evaporate to the point that the spent fuel 7 may become exposed to open air. Furthermore, other events such as earthquakes, fires or explosions, may cause water to be lost from the spent fuel pool even in the absence of boiling. Such an emergency may pose grave dangers for plant personnel and the environment.

Furthermore, during a serious plant accident when power may be disrupted, conventional level measurement instruments (requiring power) may not be used. This may cause plant operators to be unaware of the true level of the water in the SFP 10, which could prevent them from taking actions to restore the water level of the SFP 10 in the event the water level decreases to dangerous level.

### SUMMARY OF INVENTION

Example embodiments provide a method and system for a spent fuel pool (SFP) measurement that may be accomplished without the use of electrical power. The method and system may include a pressurized gas source that injects a gas through tubing that terminates near the bottom of the SFP. The tubing may include a flow meter and pressure gauge that may be located between the gas source and the SFP. Calibration data for the system may be obtained by measuring a required gas pressure (measured by the pressure gauge) to obtain a specified flow rate (measured by the flow meter) for different known SFP water levels. The pressure of the gas source may be adjusted via an optional throttle valve (located between the gas source and the pressure gauge), or it may be adjusted directly at the gas source itself. Once the calibration data is obtained, a water level measurements of the SFP may then be determined by measuring how much gas pressure is required to obtain the specified flow rate for otherwise unknown SFP water levels. Operation and controls of the system may be located in a remote location to ensure the safety of plant personnel during a potential plant accident.

### BRIEF DESCRIPTION OF THE DRAWINGS

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a cut-away view of one example design of a conventional light water nuclear reactor (LWR) reactor building;
FIG. 2 is a schematic of a level measurement system, in accordance with an example embodiment;
FIG. 3 is a flowchart of a method of making and calibrating a level measurement system, in accordance with an example embodiment; and
FIG. 4 is an example of a calibration curve, based on calibration data points obtained by a calibration method, in accordance with an example embodiment.

### DETAILED DESCRIPTION

Detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

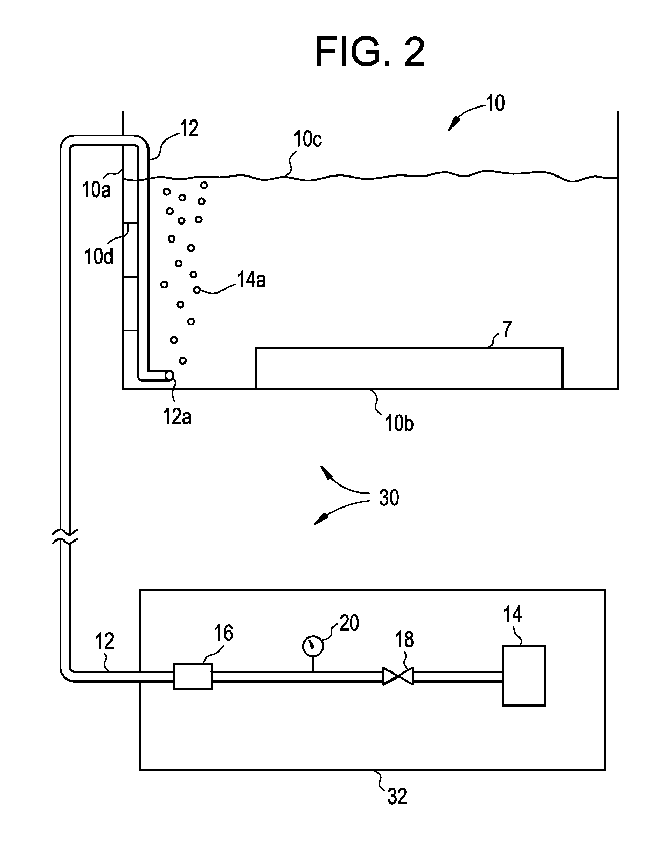

FIG. 2 is a schematic of a level measurement system 30, in accordance with an example embodiment. The level measurement system 30 may include a pressurized gas source 14 connected to the SFP 10 via tubing 12. The gas source 14 may be compressed nitrogen gas, air, or any other pressurized gas that will not cause flammability issues when the gas is discharged (see gas bubbles 14a) in the SFP 10. The gas source 14 may be, for example, a portable air tank or a diesel-engine-driven air compressor. The gas source 14 may have a relatively low pressure of less than about 150 psig. The tubing may have an outlet 12a that discharges near the floor 10b of the SFP 10. The closer the tubing outlet 12a is to the SFP floor 10b, the wider the range for the level measurement for system 30 (and, the more accurate the level measurement will be). So as not to interfere with the storage and/or maintenance / movement of the spent fuel 7 in the SFP 10, the tubing 12 may be anchored (via anchors 10d) to a side wall 10a of the SFP 10, with the tubing discharge 12a located apart from the spent fuel 7, itself.

The tubing 12 may include a flow meter 16 (for measuring the flow rate of gas passing through tubing 12) and a pressure gauge 20 (for measuring the pressure of the inside of the tubing 12) located relatively near the gas source 14. Optionally, the gas pressure of the gas source 14 may be controlled by a throttle valve 18 or other suitable type of valve located upstream of the pressure gauge 20. Alternatively, gas pressure of the gas source 14 may instead be controlled by the gas source 14, itself (for instance, if the source 14 includes a valve on the source 14). The pressurized gas source 14, the flow meter 16, and the pressure gauge 20 (and, optionally the throttle valve 18) may be located at a safe, remote location that is a distance from the SFP 10, allowing plant personnel to operate the system 30 from a safe distance from the potentially hazardous environment of the SFP 10 (in the event of a serious plant accident). For convenience (in installation and maintenance), the pressurized gas source 14, the flow meter 16, and the pressure gauge 20 (and, optionally the throttle valve 18) may also be located on a pre-fabricated skid 32.

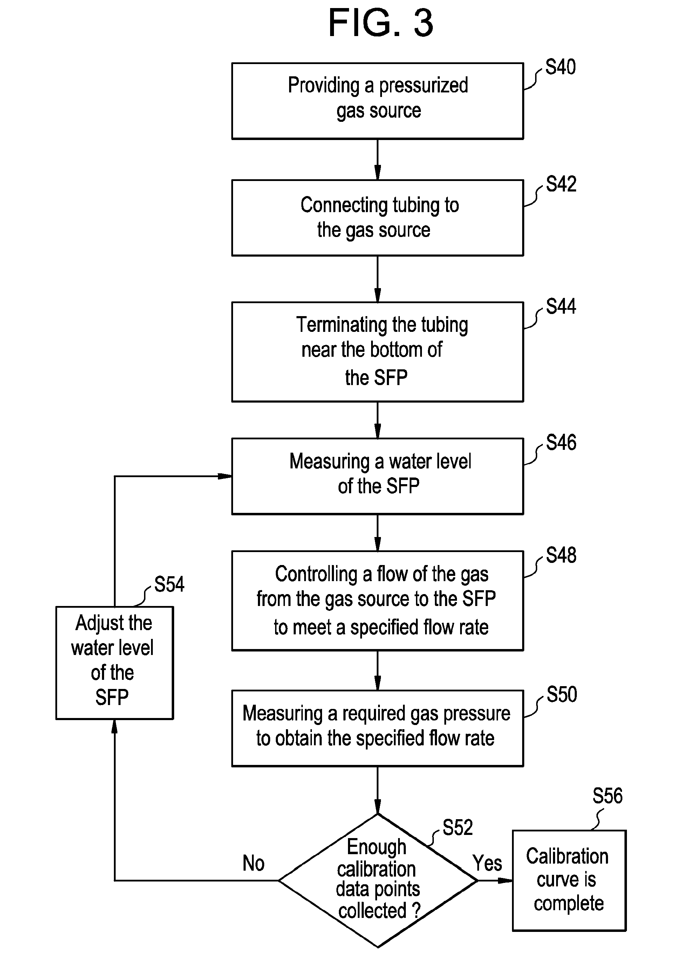

FIG. 3 is a flowchart of a method of making and calibrating a level measurement system 30, in accordance with an example embodiment. Step S40 includes providing a pressurized gas source 14, similar to that shown in FIG. 1. Step S42 includes connecting tubing or piping 12 to the gas source 14. Step S44 includes terminating a discharge end 12a of the tubing 12 near a bottom floor 10b of the SFP 10.

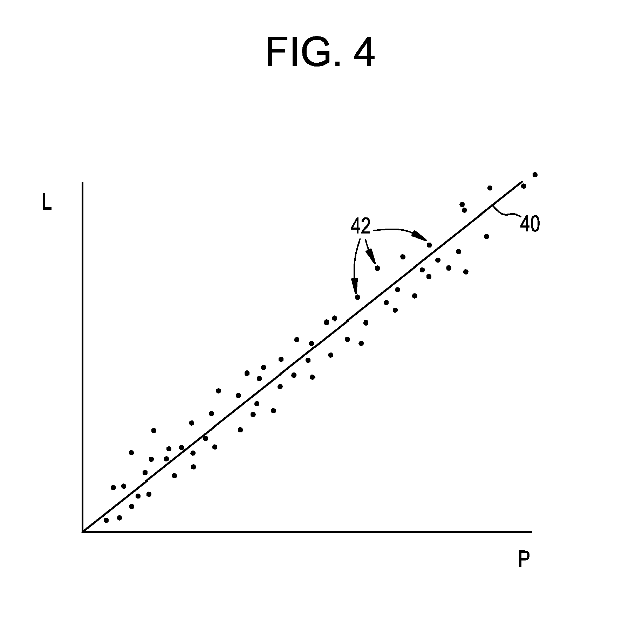

Steps S46-S56 relate to calibrating system 30. Step S46 includes measuring a water level of SFP 10 (using structure other than system 30) to determine a known water level 10c of the SFP 10. Step S48 includes controlling a flow of gas (via throttle valve 18, or via structure on the source 14, such as a shut-off valve) from the gas source 14 to meet a specified flow rate of gas traveling through tubing 12 (the flow rate being measured via flow meter 16). For tubing with an inner diameter of about ½ inch, the flow rate may be about 2 standard cubic feet per hour. Step S50 includes measuring a gas pressure of the gas in tubing 12 (via pressure gauge 20), once the specified flow rate is obtained and held steady. This pressure reading constitutes the amount of gas pressure that is required to discharge gas into the SFP 10 (see gas bubbles 14a of FIG. 2) at the specified flow rate, which may later be correlated with the water level 10c of water in the SFP 10 (as explained herein). Step S52 includes determining if enough calibration data points have been collected to form a calibration curve 40 (such as the one shown in FIG. 4). If enough data points have not been collected, in step S54 the water level 10c of the SFP 10 is adjusted so that steps S46-S52 may be repeated to ensure that enough calibration data points have been collected. Once a number of data points have been collected to produce an adequate calibration curve 40, a determination is made that the calibration curve is complete (in step S56).

FIG. 4 is an example of a calibration curve 40, based on calibration data points 42 obtained by a calibration method (steps S46-S56 of FIG. 3), in accordance with an example embodiment. The calibration data points 42 (obtained by the method of steps S46-S56 of FIG. 3) may be plotted on a graph that may include the measured pressure P (from pressure gauge 20, determined in step S50) on the x-axis and the known water level 10c of the SFP 10 (determined in step S46) on the y-axis. By obtaining enough calibration data points 42 through repetition of method steps S46-S56, a well-correlated calibration curve 40 may be formed that describes the liquid level L of SFP 10 as a function of the measured pressure P.

The final curve 40 inherently discounts pressure drop losses of gas flowing through the tubing 12 during system 30 calibration, because each pressure measurement P may be taken at a same, specified flow rate, such that this pressure drop is approximately the same for each pressure measurement P. For this reason, if changes to the tubing 12 layout are made during the course of plant operation and maintenance, the system 30 should be recalibrated (using steps S46-S56) to account for potential pressure loss changes that may occur due to the changed tubing 12 layout.

Once the calibration curve 40 has been obtained, future liquid level 10c measurements of the SFP 10 may be measured only through the use of system 30, and without the need for external power (such as power that would normally be required for electronic liquid level measurement equipment). These future liquid level 10c measurements may be measured by determining the pressure P that is required to obtain the same specified flow rate that was used during the system calibration steps (S46-S56), and then using the calibration curve 40 to determine the liquid level L based on the pressure measurement P.

It should be noted that temperature changes in the SFP 10 may vary greatly, from the calibration of system 30 (with water temperatures that may be about 72 F, or approximately room temperature) to an actual plant accident (with water temperatures near boiling, at about 212 F). However, the density changes of the liquid in the SFP 10 are small enough that the density changes have a negligible impact on the measurement of liquid level of the SFP 30 using the above-described system 30 and method.

Example embodiments having thus been described, it will be obvious that the same may be varied in many ways. Such variations are not to be regarded as a departure from the intended spirit and scope of example embodiments, and all such modifications as would be obvious to one skilled in the art are intended to be included within the scope of the following claims.

## Claims

1. A system (30), comprising:
a pressurized gas source (14);
tubing (12) connected to the pressurized gas source, a discharge end (12a) of the tubing being located near a bottom floor (10b) of a spent fuel pool (10);
a flow meter (16) connected to the tubing; and
a pressure gauge (20) connected to the tubing.

2. The system (30) of claim 1, wherein no external electrical power is needed to operate the system.

3. The system (30) of either of claim 1 or 2, further comprising:
a throttle valve (18) connected to the tubing (12), the throttle valve located on an upstream side of the tubing relative to the pressure gauge (20).

4. The system (30) of any preceding claim, wherein the spent fuel pool (10) is configured to store spent fuel for a light water reactor.

5. The system (30) of any preceding claim, wherein the pressurized gas source (14), the flow meter (16) and the pressure gauge (20) are positioned in a remote location relative to the spent fuel pool (10).

6. A method of making a system (30), comprising:
providing (S40) a pressurized gas source (14);
connecting (S42) tubing (12) to the gas source;
terminating (S44) a discharge end (12a) of the tubing near a bottom floor (10b) of a spent fuel pool (10);
connecting a flow meter (16) to the tubing; and
connecting a pressure gauge (20) to the tubing.

7. The method of claim 6, wherein the system (30) does not need external electrical power to operate.

8. The method of either of claim 6 or 7, further comprising:
connecting a throttle valve (18) to the tubing (12), the throttle valve located on an upstream side of the tubing relative to the pressure gauge (20).

9. The method of any of claims 6 to 8, further comprising:
positioning the pressurized gas source (14), the flow meter (16) and the pressure gauge (20) in a remote location relative to the spent fuel pool (10).

10. A method of calibrating the system (30) of claim 1, comprising:
measuring (S46) a water level (10c) of the spent fuel pool (10);
allowing a flow of gas to flow from the pressurized gas source (14) through the tubing (12) and into the spent fuel pool (10);
measuring, by the flow meter (16), the flow rate of the gas;
controlling (S48) the flow of gas to ensure a specified flow rate; and
measuring (S50), by the pressure gauge, a required gas pressure to obtain the specified flow rate.

11. The method of claim 10, wherein the controlling (S48) controls the flow of gas using a throttle valve (16) locate on an upstream side of the tubing (12) relative to the pressure gauge (20).

12. The method of either of claim 10 or 11, further comprising:
repeating each of the calibrating steps to produce a plurality of calibration data points.

13. The method of any of claims 10 to 12, further comprising:
producing a calibration curve (40) by plotting the measured water level (10c) of the spent fuel pool as a function of the required gas pressure to obtain the specified flow rate.

14. A method of measuring the water level (10c) in the spent fuel pool (10) using the calibration curve (40) of claim 13, comprising:
allowing the flow of gas to flow from the pressurized gas source (14) through the tubing (12) and into the spent fuel pool (10);
measuring, by the flow meter (16), the flow rate of the gas;
controlling (S48) the flow of gas to ensure the specified flow rate;
measuring (S50), by the pressure gauge (20), a gas pressure to obtain the specified flow rate; and
determining the water level (10c) in the spent fuel pool using the calibration curve and the measured gas pressure.
